# EUROPEAN PATENT APPLICATION

(11) **EP 1 777 629 A1**
(43) Date of publication of application: **25.04.2007**
(21) Application number: 05109753.3
(22) Date of filing: 19.10.2005
(51) Int. Cl.: G06F 17/24, G06F 17/30

(54) **Method and apparatus for automatic form filling**

(71) Applicant: NTT DoCoMo, Inc., Tokyo (JP); Ludwig-Maximilians-Universität München, 80359 München (DE)
(72) Inventor: Noda, Chie, 80796 Munich (DE); Hamard, John, 80333 Munich (DE); Rukzio, Enrico, 80805 Munich (DE); De Luca, Alexander, 80333 Munich (DE)
(74) Representative: Betten & Resch

(57) **Abstract**

An apparatus for automatically filling web-based forms on mobile devices comprising:
a parser for parsing a web-based form to create an object for each input field contained in said form, said object being a representation of said input field which represents one or more parameters describing or defining said input field or its neighbourhood;
a rule inspecting module for evaluating rules comprising a condition to be checked and
a conclusion to be drawn if said condition is found to be fulfilled, said evaluation being performed by trying to match a rule to an object, whereas a rule comprises as said condition a representation of an input field in which one or more parameters of said input field contain or assume a distinct value, and said rule further including as said conclusion a distinct semantic meaning of said input field, said rule further including a distinct score indicating the probability that the conclusion is true if said condition is found to be fulfilled when a rule is evaluated for a certain input field by trying to match it against the object representing said input field;
a user data filling module for automatically filling said forms based on said evaluation of said rules by filling an input field of said form with a value retrieved from a user database and identified by said semantic meaning.

## Description

### FIELD OF INVENTION

The present invention relates generally to a method and an apparatus for automatic form filling on mobile devices; particularly suited to web-based services (e.g. i-mode, WAP) whatever the underlying technologies are (e.g. (X)HTML, cHTML, WML, etc.).

### BACKGROUND ART

There are big differences from usability perspectives between text input on desktop PCs and mobile devices. Basically one can distinguish between two different text input techniques for mobile devices: key-based and stylus-based text input .A predictive text input solution can also be used in addition to these techniques. The text entry speed is normally measured in words per minute (wpm). A skilled touch typist using a conventional keyboard typically can enter an average of 72 wpm. The text entry on a mobile device is slower as can be seen in the following table:

**Table 1. Text entry speed on mobile devices**

| **Device** | **Text Input Solution** | **Words per minute** | **User experience** |
|---|---|---|---|
| Mobile Phone | T9 *(text prediction)* | 41-46 | Expert user |
| | Multi-press method | 25-27 | Expert user |
| PDA | Graffiti *(text recognition)* | 215 | Average user |
| | QWERTY keyboard | 20,2 | Novice user |

When using mobile services, users often have to manually input in forms data such as their name or address. This is often tiresome, since frequently mobile devices don't have a full-size keyboard or at least have a keyboard of only a small size which is difficult to use. Moreover, the computing resources of the mobile devices are limited compared to normal standalone PCs, and it is therefore an object of the invention to provide an automatic form filling method and apparatus which is particularly suited for mobile devices.

### SUMMARY OF THE INVENTION

According to one embodiment there is provided an apparatus for automatically filling web-based forms on mobile devices comprising:
a parser for analysing a web-based form to create an object for each input field contained in said form, said object being a representation of said input field and including one or more parameters describing or defining said input field or its neighbourhood;
a rule inspecting module for evaluating rules comprising a condition to be checked and a conclusion to be drawn if said condition is found to be fulfilled, said evaluation being performed by trying to match a rule to an object, whereas a rule comprises as said condition a representation of an input field in which one or more parameters of said input field contain or assume a distinct value, and said rule further including as said conclusion a distinct semantic meaning of said input field, said rule further including a distinct score indicating the probability that the conclusion is true if said condition is found to be fulfilled when a rule is evaluated for a certain input field by trying to match it against the object representing said input field;
a user data filling module for automatically filling said forms based on said evaluation of said rules by filling an input field of said form with a value retrieved from a user database and identified by said semantic meaning.

The parser generates an object as a relatively simple representation of each input field. This representation corresponds in its form and structure to a set of predefined rules which can be matched against this object by checking whether the distinct value which a parameter assumes in a rule coincides with the value which this parameter assumes in the object. If a coincidence is found the condition of the rule is fulfilled and the (fixed) conclusion corresponding to the condition is drawn, namely that the input field has a certain semantic meaning corresponding to this rule. Furthermore the rule includes a defined score which indicates that the conclusion actually is true.

The (fixed) conclusion and the (fixed) score make it comparatively easy to evaluate the rules even if the resources of the mobile device are limited.

According to one embodiment said parser is adapted to generate an object structure representing all the input fields in a form to be automatically filled, said object structure containing one object for each of said input fields.

The object structure gives a full representation of all the form input fields to be automatically filled. This representation only concerns the information of the form which is relevant for defining which user data should be inserted into the form.

According to one embodiment said object structure comprises a list containing said objects,each object being a representation of the corresponding input field and comprising a reference (e.g. a pointer) to the preceding and succeeding objects.

According to one embodiment said rule inspecting module being adapted to evaluate for each input field of said web-based form a plurality of rules stored in a rule repository by trying to match said rules against the object representation corresponding to said input field; and
for each certain semantic meaning of said input field for which one or more corresponding rules have been found to be fulfilled, combing the scores corresponding to the rules fulfilled for a certain semantic meaning to obtain a combined score and selecting the semantic meaning for the input field for which the highest combined score has been obtained.

The provision of multiple rules for one semantic meaning makes it possible to obtain a higher accuracy for the result from the rule evaluation by combining the scores assigned to the individual rules which correspond to a certain semantic meaning. The semantic meaning having the highest combined score is then chosen for filling the form.

According to one embodiment another possible implementation is that the highest score is chosen for the primary candidate, but other lower scores can be additional candidates which can be also shown when the user clicks the form (similar to auto-complete feature in a browser like the internet explorer). The probability of additional candidates may be shown to the user, e.g. by distinguishing colors dependent of probability, or listing candidates ordered according to probability.

According to one embodiment said apparatus is implemented as a proxy acting as a mediator between the web browser running on the mobile device and a web server on which a form is to be filled.

The local proxy architecture in combination with a lightweight algorithm achieved by assigning fixed scores to the individual rules makes the apparatus for automatic form filling particularly suited for mobile devices It can also be suitable for proxies implemented on servers that need to treat multiple requests from multiple users simultaneously.

The proxy can be installed on the mobile devices on demand or can already be pre-installed. It mediates all communications between the web browser running on the mobile device (such as i-mode, WAP, or (X)HTML) and web servers, by analysing the characteristics of data input fields and filling them with user data stored on the mobile device.

According to one embodiment the proxy or its functionality can be also integrated as a part of browser.

The local proxy architecture can be applied to existing mobile devices and web-based services. The proxy acts as a mediator between the web browser running on the mobile device and web pages on the server side. All forms of existing mobile services (e.g. i-mode), based on current technologies (e.g. HTML, XHTML, cHTML, WML/WAP) can be filled out without any changes since the proxy can be pre-installed or downloaded as a plug-in application.

In one embodiment all user data used for form filling are stored on the mobile device and are not distributed to gateways or service providers' servers. The forms filled by the proxy are displayed on the mobile devices to the user who can confirm the input data before sending back or posting the form to the server. Probabilities may be also displayed to help users checking the inputs in different ways (e.g. forms filled with less than 30% probability could be displayed in red).

According to one embodiment the pre-defined scores assigned to the rules and indicating the probability of the conclusion being true are based on an analysis of existing web contents such as existing web-based forms.

According to one embodiment said parameters defining or describing said input field which are represented by said objects and said rules are one ore more of the following:
a label which is displayed next to said input field when said form is displayed on said mobile device;
an internal name of said input field in the source code of said web-based form.

A label describes or represents the surrounding or neighbourhood of an input field. In one embodiment a label is the text string which precedes the input field when it is displayed by the browser. This reflects the fact that the label of an input field correlates with its semantic meaning.

Similarly, the internal naming of the input field in the source code also mostly is correlated with the semantic meaning of the input field and may therefore be chosen as a parameter for the condition of the rules.

According to one embodiment said apparatus is implemented as a proxy server enabling access to multiple users.

This enables multiple users to make use of the apparatus. It may be implemented e.g. as an element on a portal server, or on any intermediate or destination node in an internet connection to enable multiple users to take advantage of the automatic form filling functionality.

According to one embodiment said rules in addition to said parameters contain an indication of the location of said parameters with respect to the input field. This makes it possible to make use not only of the area where the input field itself is located but also of its surroundings.

According to one embodiment said indication of a location of a certain parameter with respect to a certain input field may indicate one or more of the following:
the input field preceding the current input field;
the current input field;
the input field succeeding the current input field.

This makes it possible to make use not only of the area where the input field itself is located but also of its surroundings such as the location of the preceding or the succeeding input fields and the values which the parameters take at these locations.

According to one embodiment if a rule which has assigned score indicating a probability of hundred percent is found to be fulfilled for the currently evaluated input field no further rules are evaluated and the semantic meaning corresponding to said rule is chosen for filling said input field. This may significantly shorten the necessary computing power for evaluating the rules because the evaluation of a plurality of rules may be aborted to shorten the whole procedure.

According to one embodiment rules are classified as either normal rules or as superior rules, the score of the superior rules being higher weighted when deriving the total score for a certain semantic meaning.

The distinction between superior rules and normal rules takes into account the fact that not all rules - in addition to their mere probability of being true as derived from a statistical analysis of existing web-pages - should be assigned the same weight. E.g. rules relating to an input field itself usually can be more trusted than rules relating to preceding or succeeding input fields.

According to a particular embodiment the abortion of the rule evaluation process in case of a rule being fulfilled having a score corresponding to a probability of 100 percent is only carried out for superior rules. This reduces the possibility of a too early abortion in response to a rule being judged falsely as true because it is only a normal rule.

According to one embodiment said parser and said rule inspecting module are located on a translation server separate from said mobile device, said translation server forwarding to said mobile device identifiers as a result of said rule evaluation which enable said mobile device to fill said web-based form by the corresponding user data.

This reduces the necessary resources on the side of the mobile devices. Nevertheless, all user data may be kept at the mobile device, thereby ensuring privacy.

According to one embodiment an apparatus further comprises:
a user interface enabling the user to reedit the data which has been automatically filled into said form by said apparatus based on said rule evaluation, and
an updating module for updating the rules in the rule repository based on the amendment or an confirmation of the suggested data by a user.

The user interface enables user editing in order to make corrections if an automatic filling of a field led to a wrong result. Moreover, by dynamically updating the rules the rules repository and the quality of the rules stored therein can be continuously improved. Thereby also a change in the average style of forms which could e.g. change due to fashion or fads can be corrected or taken into account.

The updating of the rules on a mobile device can be performed in a twofold manner. According to one manner the local rule repository may be updated based on a user input as mentioned before. On the other hand there can be a central rule repository (e.g. on a server) and the rules stored there may be updated based on a user input on an individual phone as described before. A thus updated version of the rules may then be downloaded by other mobile devices to keep their rule repository up to date.

According to one embodiment said updating module comprises one or more of the following:
a module for decreasing the score of a rule the conclusion of which has been amended by said user input;
a module for increasing the score of a rule the conclusion of which has been not been modified by said user amendment;
a module for storing a new rule if no rule exists yet which corresponds to said user amendment.

This enables it not only to correct the probabilities of existing rules in response to an amendment made by the user but also the incorporation of new rules into the database. The amendment made by a user may correspond to inputting user data which are stored under a different concept name on the mobile device to replace the data suggested by the form filling apparatus for the input field. This then can lead to a decrease in the score of the rule. On the other hand, not modifying (in other words "confirming") the suggestion from the form filling apparatus may trigger the increase of the score for this rule. Moreover, if the user inputs some data for which no corresponding rule is generated (either because there is no conclusion containing the inputted user data or even because the inputted user data is not yet stored in the mobile device yet) such a rule may be newly generated and stored. If the inputted user data also is not yet stored in the mobile device under some concept name this may also be carried out in such a case. The user may then be asked to input a concept name, or the label or tag of the input field from the source code may be used as concept name which avoids the need for an extra user input.

According to one embodiment there is provided apparatus for automatically generating a set of rules to be used in connection with an apparatus for automatic form filling according to one of the embodiments of the invention, said apparatus comprising:
for each semantic meaning which an input field may assume, having stored a list of possible values which parameters describing or defining said input field or its neighbourhood may assume;
a module for parsing web-based forms for input fields and generating an object for each input field, said object being a representation of said input field which represents one or more parameters describing or defining said input field or its neighbourhood, whereas;
a module for each object trying to match said object against said lists of possible values, and if a parameter matches with a certain one of said values generating a preliminary rule comprising said value as parameter of a condition and the semantic meaning corresponding to said value as defined by said list as a conclusion:
   a module for each time a match is found, checking if a corresponding pre-rule has already been generated, and if so, for incrementing a counter corresponding to said pre-rule:
      a module for evaluating the pre-rules which have thus been generated and correspond to the same semantic meaning by evaluating their respective counters to determine their respective score.

This enables to generate the rules in an automatic manner by evaluating a large number of existing web-based forms to generate a rule repository which is statistically representative.

### BRIEF DESCRIPTION OF THE DRAWINGS

Fig .1 schematically illustrates the configuration of an apparatus according to an embodiment of the invention
Fig .2 schematically illustrates the configuration of an apparatus according to an further embodiment of the invention
Fig .3 schematically illustrates an input form and its HTML representation.
Fig .4 schematically illustrates the procedure according to an embodiment of the invention.
Fig .5 schematically illustrates the procedure according to a further embodiment of the invention.
Fig .6 schematically illustrates the procedure according to a further embodiment of the invention.
Fig .7 schematically illustrates the procedure according to a further embodiment of the invention.
Fig .8 schematically illustrates the configuration of an apparatus according to an further embodiment of the invention
Fig .9 schematically illustrates the operation according to a further embodiment of the invention.
Fig .10 schematically illustrates the procedure according to a further embodiment of the invention.

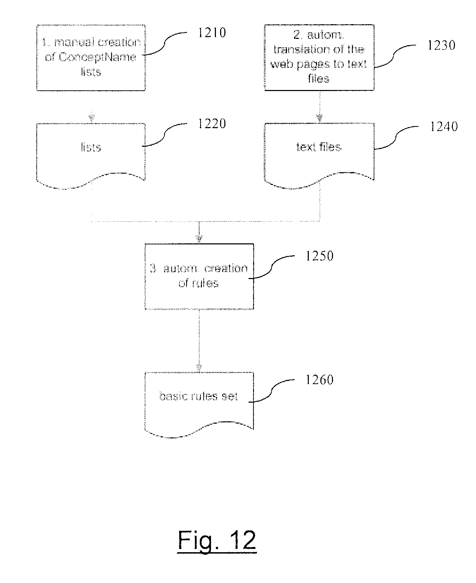

Fig 11 schematically illustrates the procedure according to a further embodiment of the invention.
Fig .12 schematically illustrates the procedure according to a further embodiment of the invention.

### DETAILED DESCRIPTION

In the following the present invention will be described by means of exemplary embodiments in connection with the accompanying drawings.

However, before explaining in detail embodiments of the present invention, at first an operation of an automatic form filling algorithm for web-based services as described in T. Chusho, K. Fujiwara and K. Minamitani, "Automatic Filling in a Form by an Agent for Web Applications", Asia-Pacific Software Engineering Conference 2002, IEEE Computer Society, pp.239-247, 2002, will be described.

The Algorithm of Cusho uses relatively complex rules which consider multiple Concept Names in parallel. The term Concept Names in the context of this application refers to the internal naming of personal information in an algorithm. An example is that the algorithm uses internally *FirstName* for addressing the first name of the person. In other words, a concept name is the label which identifies a certain semantic meaning of data which may be used to fill a form.

In Cusho et al. there are defined rules which consist of the case of a certain input field, i.e. the four sides (left, right, upper, lower with respect the input field to be analysed) and the respective values at these locations, and the action which is to be taken. To check which action (for example choosing the first name) fits best to an input field; Cusho's algorithm checks every single side ((left, right, upper, lower) of every single rule and decides the relative frequency of each action (in other words, for different Concept Names to be chosen) for each side. This means that multiple Concept Names have to be considered in parallel for individual rules. At the end it takes the action that has the highest certainty. This means, that the algorithm decides the certainty of one action (i.e. a certain Concept Name to be used for filling the form) while examining a form and the available rules, and decides the certainties of every single part (every possible Concept Name) of every single rule according to the four sides.

In the form filling method according to embodiments of the present invention a rule consists of a value (which may be a character string, a number, or the like) and its location with respect to the input field which is being analysed. The rule being fulfilled means that at the location with respect to the input field as defined by the rule there is located the value defined by the rule. A rule being fulfilled leads to a predefined Concept Name which corresponds to this rule and which is to be used to fill this input field of the form. Every rule further includes also its own pre-defined probability (the probability that indeed the input field should be filled with the Concept Name corresponding to this rule), based on evaluation of a big amount of online available forms for automatic form filling. This means that the certainty or probability for every rule is pre-defined and doesn't have to be computed during the input field checking, which saves CPU time on the mobile device. The form filler just has to check which rule fits to the input field.

While the individual rules may be kept relatively simple, according to one embodiment by summing up probabilities of rules that fit to the input field, complex rules can be dynamically created as will be explained in somewhat more detail later.

According to one embodiment 6 sides or locations with respect to an input field are considered. The Labels and the name attributes of the upper, lower and current input fields, which are extracted from the HTML source code. For the Label, the last text is chosen, that is found in front of an input field.

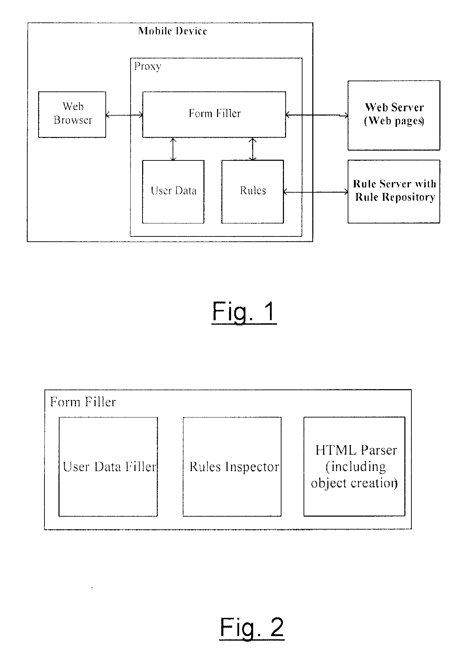

The basic concept of an architecture according to an embodiment of the invention is depicted in figure 1 is the proxy which acts as a mediator between the internet browser on the mobile device and the web server which hosts the requested webpage.

The proxy which consists of three basic components, the form filler, the user data and rules is integrated to the mobile device to mediate the web browser and web servers. The proxy can be pre-installed to the mobile device in advance, or downloaded as a 3^{rd} party application to act in a plug-and-play manner. User data can be specified by the user through the user interface of the mobile device, retrieved from the user profile on the device itself or the SIM/USIM card plugged in, or stored by monitoring and gathering the data from the forms filled by the user. The rules can be pre-installed, or downloaded on demand. The rule server is an external component which stores and provides the form filling rules. The proxy on the mobile phone uses the rule server to keep the local rule set up-to-date and it supports also the rule server regarding the update of the rule repository.

All web pages (e.g. HTML, XHTML, cHTML (i-Mode), WML/WAP) downloaded from web servers to the mobile device or sent back to post are passed through the proxy. So the proxy acts as a mediator between the web browser and the web pages on a web server. If the web pages include forms, the form filling components take actions to fill them, based on the available user data and the rules which fit the best to the forms environment. In this way, the proxy provides an interface to access the actual web pages. Such a proxy has the advantage that it can be applied and plugged to every existing web browser without any modifications.

The user data is used by the form filler according to the matched rules, to fill out the form with the user data. The management and storage of the user data (e.g. FullName, FirstName, AddressStreet1, CreditCardNumber, etc.) are not described here in detail, because there exists already a considerable amount of work on how these data can be structured. Moreover, for the operation of the embodiments of the present invention it is not of significance how in detail the user data is stored and organized, as long as the individual parts of the user data having a distinct semantic meaning can be identified and retrieved to fill the form. For that purpose, e.g. in the data structure storing the user data, several *Concept Names* like FirstName for the first name of the user must de defined to identify the corresponding user data. The *Concept Names* are then used to map the user data to fill in input fields.

To create the form filling rules, one can analyze existing forms on web pages. It will be described later in somewhat more detail how such an analysis can be carried out. When conducting such an analysis, one finds out that there are a lot of similarities on requested concept names and the placement of input fields in the forms. So the probability that an input field which is labeled with *First Name* should be filled with the first name of the user is extremely high. Just as a remark it should be mentioned here that the user data consisting of the first name of the user may correspond to the e.g. the concept name (i.e. the internal labeling of the corresponding user data) FirstName or any other identifier used as a concept name of the first name of the user.

Furthermore the context of input fields can also be important. With context it is meant here how this concrete input field is defined (e.g. by HTML statements or other "source code" statements) and which text or other form elements are around it. For example, there is a certain probability that after the first name the last name is requested in a form.

The rule server stores a set of rules as depicted in Figure 1. A first rule set can e.g. be generated by the analysis of existing web pages. The initial rule set may be generated manually, or as will be described late the rule generation may be performed automatic or semi-automatic. Moreover, according to one embodiment which will also be described later in somewhat more detail, through the usage of the form filling proxy by the user the initial rule set may gets updated.

Rules may be regarded as defining a condition which is to be checked, and a conclusion to be drawn if the condition is found to be fulfilled. The condition of the rule may define that a certain parameter, e.g. a certain part of the HTML document defining the input form, must assume a certain value if the condition should be regarded as being fulfilled. Such a parameter may e. g. be the label of an input field. The label of the input field is e. g. the text string which is displayed on the browser directly in front of the input field. Another parameter may be the Name Attribute of the input field in the source code representation of the input form.

The conclusion of the rule may be the value to be inserted into the input field if the condition is found to be fulfilled. In the following description the conclusion is often referred to as Concept Name which is to be understood as identifying a particular predefined user data, e. g. the first name, the surname, the date of birth, the age, etceteras. A certain Concept Name is an identifier for one particular type of user data.

### So a general expression of a rule may look as follows:

### Parameter value - Concept Name

Such a rule may be applied to a specific input field which means that it is checked for this input field to which the rule is applied whether the parameter of this field in the input form assumes the parameter value as defined in the rule. If so, the condition is met and the conclusion can be drawn which means that the rule indicated that the thus checked input field should be filled using the user data identified by the Concept Name defined in the rule.

As mentioned already, in one embodiment different parameters may be used to create rules, e. g. the label of an input field and its Name Attribute. Moreover, these parameters need not to relate to the input field to which the rule is applied but may relate to a parameter of a different input field (e. g. a preceding (upper) or a succeeding (lower) input field) compared to the input field to which the rule is applied. This leads then to the following six parameters which according to one embodiment may be parameters of a rule:
Upper LABEL: the last text before of the upper input field
Upper NAME_ATTRIBUTE_VALUE: the value of the name attribute of the upper input field
Current LABEL: the last text before of the current input field (the actual input field to which the rule is applied)
CURRENT NAME_ATTRIBUTE_VALUE: the value of the name attribute of the current input field
Lower LABEL: the last text before of the lower input field
Lower NAME_ATTRIBUTE_VALUE: the value of the name attribute of the lower input field

Upper here refers to the previous input field found in the HTML document before the current one to which the rule is applied. Lower is the first input field found after the current one. One can see that in this example a rule in addition to a parameter contains an indication of the location of the parameter with respect to the input field currently being checked (the input field to which the rule applies).

In one embodiment each rule furthermore has assigned a score which indicates the likelihood that the conclusion is true if the condition is fulfilled. This score may actually in one embodiment be the likelihood of the conclusion being correct. The likelihood may be derived from a statistical evaluation of existing input forms, and it may furthermore be dynamically updated as will be explained later.

In one embodiment a rule repository is to store rules, which conform to the following syntax or schema:
Parameter Operator |Value| Concept Name |Score , whereby
Position = {UPPER_LABEL, UPPER_NAME_ATTRIBUTE_VALUE, CURRENT_LABEL, CURRENT_NAME_ATTRIBUTE*_VALUE,* LOWER_LABEL, LOWER_NAME_ATTRIBUTE*_VALUE*}
Operator = {CONTAINS, EQUALS}
Value = arbitrary String, e.g. a label tag, the string just before the form, the name attribute of the form, in other words the value which the parameter assumes
Concept Name = element of the user data (i.e.to be used to fill in the form), e.g. FirstName
Probability = number between 0 and 100 representing likelihood

The part <Parameter | Operator | Value > forms the condition of the rule.

If the Parameter has the relationship with the Value as defined by the operator the condition is fulfilled, and the conclusion may be drawn with a Probability indicated by Score that the Concept Name y has to be filled into the input field to which this rule has been applied.

In other words, the rules as defined above consists of the following elements, namely
a) a condition which is checked (i.e. is at a certain location with respect to the input field being analyzed a certain value existing). This condition is represented in the rule above by the part Parameter Operator |Value. The value may refer to the value which a certain variable takes, the variable may e.g. be a label which is contained in the form and labels the input field, or it may be a label which actually refers to the name of the input field in the source code of the form, this kind of label is referred to above by the string NAME_ATTRIBUTE_*VALUE*.
b) A concept name specific for this rule and a probability with which the concept name which corresponds to the rule identifies the user data to be used for filling

In the following some examples for rules are listed together with a corresponding explanation of their meaning:
- *CURRENT_NAME_ATTRIBUTE*_*VALUE* |*CONTAINS*|*firstname*|*FirstName*| *100*
   If the name attribute (*CONCEPT*_*VALUE)* of the input field *CONTAINS firstname* then the probability is 100% that the input field should be filled out with the first name *(FirstName)* of the user.
- *UPPER_NAME_ATTRIBUTE_VALUE* |*CONTAINS*|*firstname*|*LastName*|*81*
   If the name attribute *(UPPER_CONCEPT*_*VALUE)* of the input field which is above the current input field *CONTAINS firstname* then the probability is 81% that the input field should be filled out with the last name *(LastName)* of the user.
- *CURRENT_LABEL*|*CONTAINS*|*address*|*AddressStreet1*|*46*
   If the string left to the input field *(LEFT) CONTAINS address* then the probability is 46% that the input field should be filled out with the *address street 1 (AddressStreet1)* of the user.

In the following there is described an embodiment which makes use of prioritised rules having a higher priority than other rules. The prioritised rules, so called superior rules, are based on the analysis of the description of the current input field itself. Therefore the name attribute of the input field and the string which stands left to it are analysed.
In this embodiment there are introduces two different types of superior rules:
1. Rules for CURRENT_LABEL or CURRENT_NAME_ATTRIBUTE that have a probability of 100% are instantly chosen if they are found for the current input field. In other words, if a rule having a probability of 100% is found to be fulfilled, there is no need to check other rules and the concept name assigned to this rule is chosen for filling the form.
2. Rules for CURRENT_LABEL or CURRENT_NAME_ATTRIBUTE that have a probability of less than 100% are rated higher than the other rules found. This means, they are assigned a higher score compared to other rules. The score expresses the weight with which the rule influences the final decision as to which concept name to be chosen for filling the form.
   As will be explained later in more detail, the scores of individual rules having the same concept names assigned may combined (e.g. by summing them up), and this results then in a total score for the corresponding concept name which may then be compared to the scores derived for other concept names (using different rules), and based on the scores a decision may be made which concept name is to be chosen for filling the form. The score in the following also is sometimes named Concept Points, because it expresses the score of a certain concept name assigned to this rule.

In one embodiment, in addition to the current input field the upper and the lower (with respect to the current) input fields are also analysed. There is for instance a specific probability that the last name is requested after the first name.

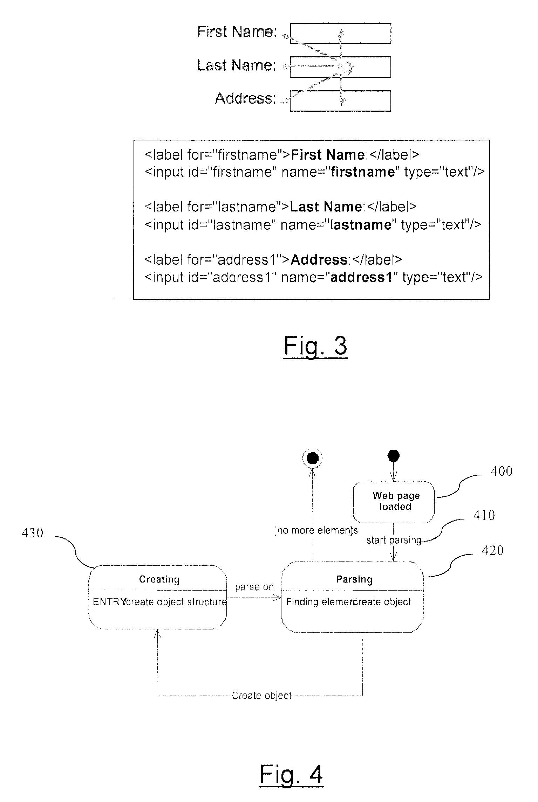

Figure 3 shows a part of a typical form (e.g. for reserving a hotel room) and the corresponding HTML code. The arrows indicate the 6 positions that are analysed by the algorithm. The positions refer to the bold marked values in the HTML code. The label and the name attribute value (name="...") of each field (current, upper, and lower) are analysed.
In the depicted example are:
Upper LABEL: First Name
Upper NAME_ATTRIBUTE_VALUE: firstname
Current LABEL: Last Name
Current NAME_ATTRIBUTE_VALUE: lastname
Lower LABEL: Address
Lower NAME_ATTRIBUTE_VALUE: address 1

It should be noted that the label doesn't refer to the html element <label/> but to the last text found before the input field, independent of how it is marked (<div>,<p>,<span>...) and even if it's not marked. what is meant here is that just the text string which precedes the input field when it is being displayed by the browser displaying the form.
Generally speaking, this form filling architecture and the algorithm can be used for all different languages. For this, existing forms in this language must be analysed to define a first set of rule for this language.

For analysing and filling the form, a proxy is used which acts as a mediator between the internet browser on the mobile phone and the requested web page. Therefore the proxy configuration either is specified in the browser, the mobile phones browser is extended by a plug in. Through this every request of the browser is first transmitted to the proxy, which forwards this request to the corresponding web page. The corresponding response of the web server (requested web page) is then delivered to the proxy, which parses the HTML page, tries to fill out forms and sends the result to the web browser.

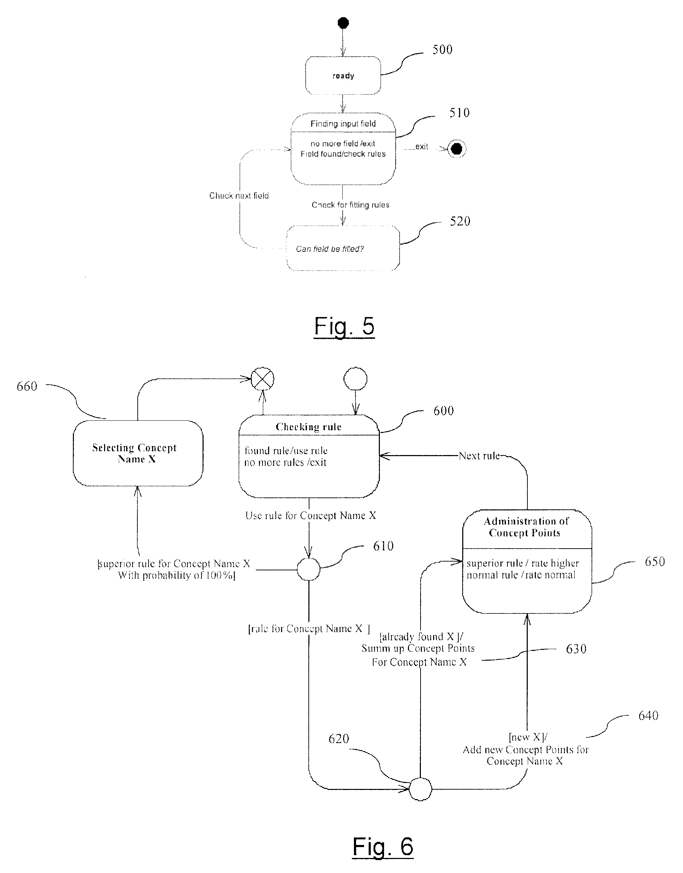

The proxy comprises a component for the form filling which may be called "form filler". The form filling module may be implemented by a computer program which when being executed carries out an algorithm or a procedure which is now described in somewhat more detail in the following.
**1.** The user data and the form filling rules are loaded from the storage of the mobile phone and the rule server respectively. Downloading of the rules is not required in all cases. If new rules are present on the rule server or no rules are present on the mobile phone the rules are downloaded, otherwise the rules stored at the mobile phone are used.
**2.** The browser requests a web page through the proxy.
**3.** The proxy parses the downloaded webpage and creates a corresponding object structure by checking every input field. This process is depicted in Figure 4. In operation 410 the parsing finds an input field and then creates a corresponding object or "form" or "structure". The object is a representation of the input field which follows a certain schema, the schema representing those parameters of the input field which are actually relevant for evaluating a corresponding rule. The two parameters which according to one embodiment are relevant are the label of an input field as it is displayed on the screen by the browser, and further the definition of the of the input field as it is defined in the source code. For each found input field of a form to be filled such an object is created which includes these two variables, the "label" of the field as displayed and its definition in the source code of the form. This results then in an object for each input field found by the parser, the object having the form (label, input-field-definition). The input field definition may comprise the attribute name of the input field as defined in the source code, it may further include the type of the input field and also its value as it is predefined by the source code of the form to be filled. If for instance the following input field is included in a parsed form: <input type="text" name="firstname" value=""/>, the generated object includes the elements (label, input-field-definition(type, attribute_name, value)). The variable "label" may be just the text string which precedes the input field when being displayed on the browser. If in the source code there would be defined some text string as </label> this text string could be used as the label when generating the object in step 410 of Fig. 4. If there is no such specifically defined "label" the text string just preceding the input field when being displayed is used as "label" for generating the object. In the present example then the input-field-definition takes the form input-field-definition(text, firstname, null)), because the type of the input field is "text", its attribute name in the source code is "firstname, and its value is null. Assuming that the parser would find the label "First Name:" for the input field as the text string directly preceding the input field when being displayed, the resulting object would take the form (First Name:, input-field-definition(text, firstname, null)).
   This object now represents knowledge about the input field which it represents. For each input field in the form to be filled there is generated such an object. According to one embodiment there is generated an object structure based on these individual objects, and each newly generated object is entered into this object structure as shown in operation 420 of Fig. 4. Once a newly generated object has been entered into the object structure the flow proceeds with further parsing in operation 410. If again a new input field is found it is also entered into the object structure, if no further elements (input fields) are found the procedure ends.
   The thus generated object structure in one embodiment may comprise a list of the individual objects generated during the parsing process as schematically shown below.
   Object 1 (label, input-field-definition);
   Object 2(label, input-field-definition);
   Object n(label, input-field-definition))
   Such an object structure represents the form to be filled by representing the input fields according to a certain schema, namely by the label of the input field and the input field definition. The objects representing the input fields therefore represent knowledge about the configuration and to some extent also about the meaning of the input fields. The knowledge representation may include knowledge about a label as it is shown by a browser on the screen and about the input field definition in the source code such as the attribute name of the field. The object may therefore be regarded as a representation of the input field, and at the end of the parsing process there is an object structure containing an object for each input field of the form to be filled.
   According to one embodiment an object of the object structure further includes a reference to its preceding object in the object structure and to its succeeding object in the object structure. The reference may e. g. take the form of a pointer. This may be helpful when evaluating a rule for a certain input field while the parameter of the rule actually does not belong to the input field currently being evaluated but to a preceding input field or to a succeeding input field.
   This object structure can then be used to check whether the thus represented input fields are in accordance with predefined rules which follow the same schema. A rule can be evaluated by matching the rule to the objects or combinations of objects in the object structure, in other words by checking whether the predefined parameters in the rule match with the corresponding values in the object or objects.
   The parameters of an object are "label" and input-field-definition. A rule can consist of a predefined value for the parameter "label", another rule can consist of a predefined value for the parameter input-field-definition. In addition to the parameter which is predefined in a rule the "location" of the thus defined parameter with respect to the input field being checked is also defined in the rule. The defined parameter of a rule may e.g. relate to the preceding input field, to the current input field and to the succeeding input field. On rule may e.g. defined the value of the parameter "label" for the input field which precedes the input field which is to be checked by this rule. Assuming that the thus defined parameter is "First Name" as the label for the preceding input field, evaluating the rule for the n-th input field of a form means that for its preceding (the n-1th) input field it is checked whether the label of this field is "First Name". This can be done by comparing the rule with the (n-1)th object in the object structure mentioned before. Similarly, if then rule is to be evaluated for the (n+1)th input field it is compared to the n-th object in the object structure.
   If the value of the parameter in the rule (which is predefined for each rule and in the present example is here the "label" "First Name") and the value of the corresponding parameter in the corresponding object of the object structure coincide (i.e. "match") the rule is judged as being fulfilled.
   In this manner rules can be defined for different parameters (e.g. the parameters "label" and " input-field-definition") at different locations with respect to the input field to be checked. Assuming that the parameters "label" and " input-field-definition" should be checked for the input field preceding the field to be checked, for the input field to be checked and for the succeeding input field, this leads to six basic rule schemas.
   For each of these rule schemas there may be defined a plurality of rules, whereas a rule is a statement or "form" following this schema and where the parameters assume predefined values which then can be compared with the values which these parameters assume in the objects of the object structure. In this manner the rule evaluation can be performed.
   It should be mentioned that the six basic schemas mentioned before are just exemplary, and that other parameters and other locations of the parameters may as well be used for defining rules.
4. Then the input fields are evaluated. This will now be explained by referring to Fig. 5 which schematically illustrates this process. In operation 510 the procedure looks for an input field. This can be done e. g. by going through the object structure because this structure contains an object for each input field. If an object structure is found this means that actually an input field has been found. Then in operation 520 all the rules are checked in order to evaluate whether the field thus checked can be automatically filled. If so, the field is filled. Then the next field is looked for and checked, until no further fields are found.
   All rules that fit to the field are selected and evaluated in operation 520 which will be explained now in somewhat more detail in the following in connection with Fig. 6. There is mostly more than one rule which fits to the input field. This means that - in case of the six basic schemas mentioned before - for one input field there can be rules for some or all 6 possible schemas which fit to the field. Every rule includes a probability that describes how often (in percentage) a value for a specific Concept Name is found in a specific position (in other words, how likely it is that the conclusion belonging to this rule is correct). An example is, that "left contains address" fits to different Concept Names like AddressStreet or EmailAddress but with different probabilities. In some sense the likelihood of a rule being true is a "score" belonging to this rule, the score representing the likelihood of the rule being true.

When a rule is found to be fulfilled for an input field, this rule's probability is converted to another score which is in the following called Concept Points. The conversion may take several aspects into account, i.e. the probability value assigned to the rule and the type of the rule (whether it is a normal or superior rule). This is shown in Fig. 6 where the checking operation 600 starts at step 610 by distinguishing between normal and superior rules having a likelihood of 100 percent.

If the rule is found to be a normal rule with a probability of less than 100 percent in operation 610, during checking the input field, all Concept Points found for a specific Concept Name (for example: this field fits to the concept name AddressStreet) are summed up as illustrated by operation 630 in Fig. 6. If in operation 620 it was found that the rule being checked corresponds to a Concept Name for which no concept points have been accumulated yet, then in operation 640 there is generated a concept point counter to accumulate the concept points for this new Concept Name. In this manner the for all Concept Names for which corresponding rules have been found to be fulfilled the corresponding concept point counters are accumulating the concept points. At the end of the checking, the algorithm compares the Concept Points between the different possible Concept Names found. The Concept Name with the highest amount of Concept Points is selected.

In one embodiment there may be two types of superior rules, both types being handled differently. The first type of superior rules are rules having a likelihood of 100 percent and whose parameters relate to the input field currently being checked (and not the preceding or succeeding input field). The second type of superior rules are rules which have a likelihood less than 100 percent but whose parameters also relate to the currently being checked input field (and not to the preceding or succeeding input field). In one such embodiment the parameters of the rules in general are the label of the input field and the source code attribute of the input field. For the superior rules then the two following cases may be distinguished which may be applied to increase the speed of the process and utilise a limited resource capability of the mobile device:
1. Rules for CURRENT_LABEL or CURRENT _NAME_ATTRIBUTE (i.e. relating to the current input field) that have a probability of 100% are instantly chosen for selecting the Concept Name to fill the input field if they are found to be fulfilled for the current input field. This is illustrated by operation 660 in Fig. 6.
2. Rules for CURRENT_LABEL or CURRENT_NAME_ATTRIBUTE (i.e. relating to the current input field) that have a probability of less than 100% are rated higher than the other rules found (i.e. rules whose parameters do not relate to the input field currently being checked). This means, the Concept Points derived from such a rule in case of a match being found is higher compared to the other (normal) rules, as illustrated in operation 650 of Fig. 6.

As mentioned before already, figure 5 illustrates that every input field is analysed by the form filling algorithm. If an input field is found then it is checked whether it can be filled out. This checking procedure is illustrated in Figure 6, which will now be explained in somewhat more detail in the following.

If a fitting rule for Concept Name X has been found (operation 600), there are two possibilities:
1. It is a superior rule with a probability of 100%, then the rules Concept Name is instantly chosen for the field (operation 660). In one embodiment superior rules are only rules whose parameters relate to the input field currently being checked.
2. Else go on proceeding the rule.
   The Administration of Concept Points in operation 620 checks if 'X' (the Concept Name belonging to the rule as a conclusion) is an existing Concept Name (for which an evaluation of rules has already led to a certain amount of concept points) or if it is a new Concept Name (for which so far no match was found):
   (i) when the concept name exists, the Concept Points are summed up (operation 630), or
   (ii) when the concept name is new, the Concept Points are stored for the new Concept Name X (operation 640).
   Converting the probabilities to Concept Points differs from normal rules to superior rules (with less then 100% probability), as mentioned before, by giving more weight to the probabilities of superior rules when deriving the concept points.
   If all rules are checked or no superior rule with a 100% probability has been found the field is filled out with the user data corresponding to the Concept Name with the highest amount of Concept Points.
**5.** Deliver the filled out web page to the browser
**6.** (optionally) Check how the user changes the filled fields (manually editing) or confirms the filling as suggested by the automatic form filling
**7.** (optionally) Rule updates or new rule generation

In the following there will be described an embodiment which relates to the generation and updating of the rules.

Based on the evaluation of existing forms, a set of predefined rules can be generated. The rule server allows the mobile device to download the rules set stored in the Rule Repository. The downloaded rules are saved on the mobile device. The user can update the rules by downloading a new set of rules from the Rule Repository.

To provide a better quality of rules, a procedure of updating rules depending on the user's actions is provided according to one embodiment. Form filling on mobile devices offers possibilities in the following manners:
1. Let the mobile device do the work.
   When a user changes the values entered by the Form Filler, the proxy recognizes and updates the locally stored rules.
2. Let the rules server do the work.
   Changes are sent to the rules server which updates the rules on the rules server.

The option 2 has more advantages in the sense that the rule server has more performance to perform rule management, analysis, and update. Another advantage of the second choice is that doing the work on the server extends and improves the global rules set, which are beneficial for all users. In this way, the rules are optimized by interactions of all users and new users can start with the optimized set of rules.

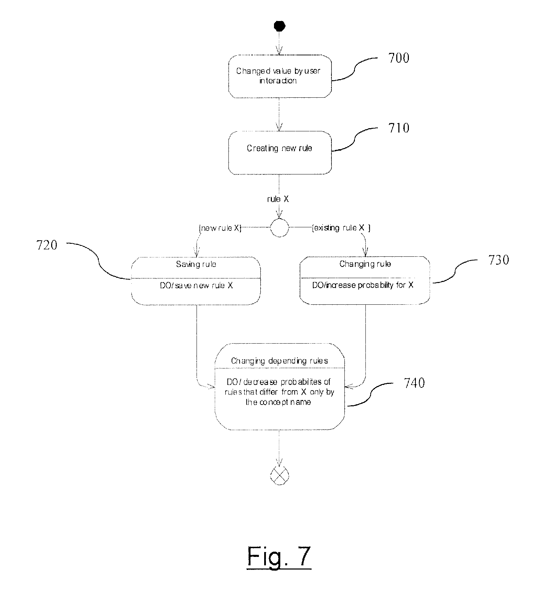

In the following there is explained in connection with Fig. 7 an example of a rules changing process according to one embodiment. In this example change is made for the example of a label "address".
1. User changes the value of an automatically filled form to the value of the Concept Name x (operation 700).
   **Example:** There is an input field on the web page, which has the label address. Depending on the set of rules it is filled out with the street address of the user, but the user changes the value and fills in its e-mail address.
2. Create a rule depending on the user's action (operation 710).
   If the position has a condition value b, then concept name = x
   **Example:** The algorithm recognizes this change and creates the rule:
   "If the label contains address then concept name equals e-mail address"
3. Save new rule (operation 720) or edit or automatically amend an existing rule (operation 730).
   3.1. If there is already such a rule then edit its probability.
      **Example:** Because there is already that rule saying
      "If the label contains address then concept name equals e-mail address" the probability of this rule is increased
   3.2. If the rule is new, just save it.
      **Example:** the rule is saved to the rules set
4. Decrease the probability of all rules that differ from the created rule only by the concept name (operation 740).
   If position a condition value b then concept name != x
   **Example:** Decrease the probability of all rules saying
   "if left contains address then concept name is not email-address"

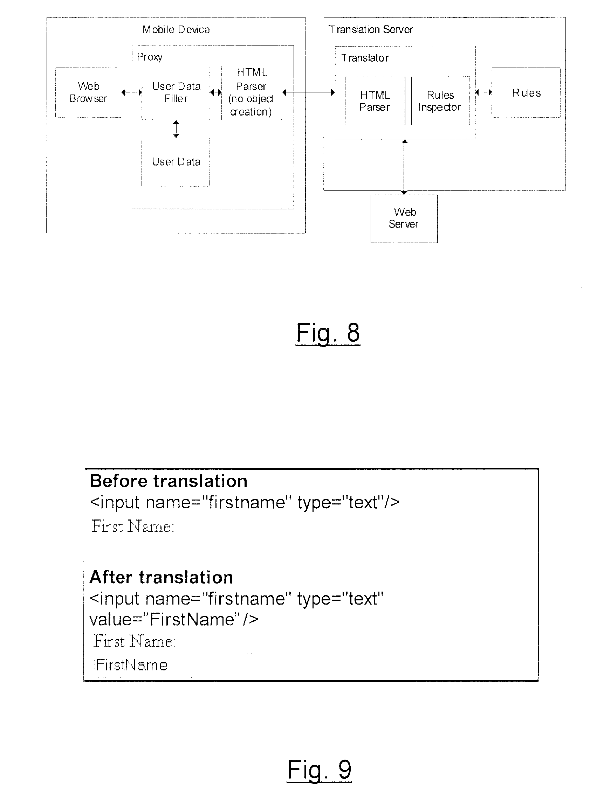

In the following there will be described an embodiment which relates to an extension of the proposed architecture explained in connection with Figure 1. The architecture is schematically illustrated in Fig. 8. It includes a the translation server which preprocesses requested forms before sending to the mobile device. The user data is still kept on the mobile device to fill in only locally.

The basic idea is to have an external translation server between the mobile device and the Web server. The proxy, which is installed on the mobile phone, knows the address of this server and forwards every web page request to it. The server downloads the webpage and translates it into a simpler version for the mobile device's proxy. Translation means, that (i) the website is parsed and an object structure is created (as explained already previously in connection with Figure 4), (ii) the rules checking is performed on the input fields (as explained in connection with Figures 5 and 6), and (iii) the place holder values are added for every input field. This is schematically illustrated in Figure 9. These Place Holder values are the Concept Names, which the mobile device uses to fill in the personal data of the concrete user.

Referring now again top Fig. 8, there is illustrated the architecture of the translation server. It consists the rules inspector and the HTML parser as well as the rules, which now placed in the translation server as compared to being placed on the proxy on the mobile phone like in the embodiment explained in connection with Figure 1. The proxy of the mobile device in this case only supports the HTML parser to fill in the user data through the user data filler, but not to create objects or the actual rule checking.

The outsourcing of some tasks to the translation server results in several advantages. One advantage of this approach is that the parts of the form filling, which require the most processing power (i.e., creation of object through the parser, and the rules inspector), are moved to the translation server. This reduces the processing time of the form filler on the mobile device, because its proxy only has to replace the Concept Name by the corresponding concrete value of the user profile (the user data), which can be done by a simple parsing operation on the translated HTML document and the replacement of the place holder values with the concrete user data.

This architecture also respects the privacy aspect by handling user data locally on the mobile device.
The rules are not stored on the mobile device any more. This not only saves memory on the mobile device, but also makes extending or amending the rules (as explained before in connection with Fig. 7) much easier.

Including the translation server into the architecture increases the efficiency of the form filling for mobile devices a lot, because checking the rules, which needs most of the processing power and takes most of the processing time, is done on the server.

In the following there will be described an embodiment relating to the generation of a first set of rules to be used in connection with the procedure for automatically filling a form.

The automatic form filling initially starts with a basic set of rules already provided. These basic rules can be created by first analyzing a large amount of Web pages including forms. In order to create a representative set of rules a sufficient amount of Web forms should be used.

To find such a large number of forms different search expressions may be entered into a search engine such as Google to find Web forms and then a download software (such as e.g. Wget) can be used to automatically download the Web forms contained in the search results.

The process which is carried out then is twofold; a first part that has to be done manually whereas the second part can be fully automated:
At first the Web forms have to be inspected in order to find the meaning of their input fields. In order to create rules at first one has to find the Concept Name of each input field on a Web form. This can be done by analyzing the downloaded Web forms and create for each Concept Name a list of corresponding Name Attributes. A Name Attribute is a part of the HTML source code indicating how the input field is referenced in the HTML source code. For instance a list for the "FirstName" Concept Name (identifying the first name of a user in the user data) could include the Name Attributes "firstname", "name", and "givenname". The lists could also be created or further extended by considering the Labels of Input Fields. In the end this process results in a list for each concept name, each list containing possible Name Attributes or labels. Such lists are required in the next steps to match an input field to its Concept Name, while automatically creating the rules.

In the following the automated rules creation process will be described. In one embodiment it consists of two steps. It may (like other procedures explained in connection with embodiments of the invention) be implemented b a computer program, e.g. by a program written in Java.

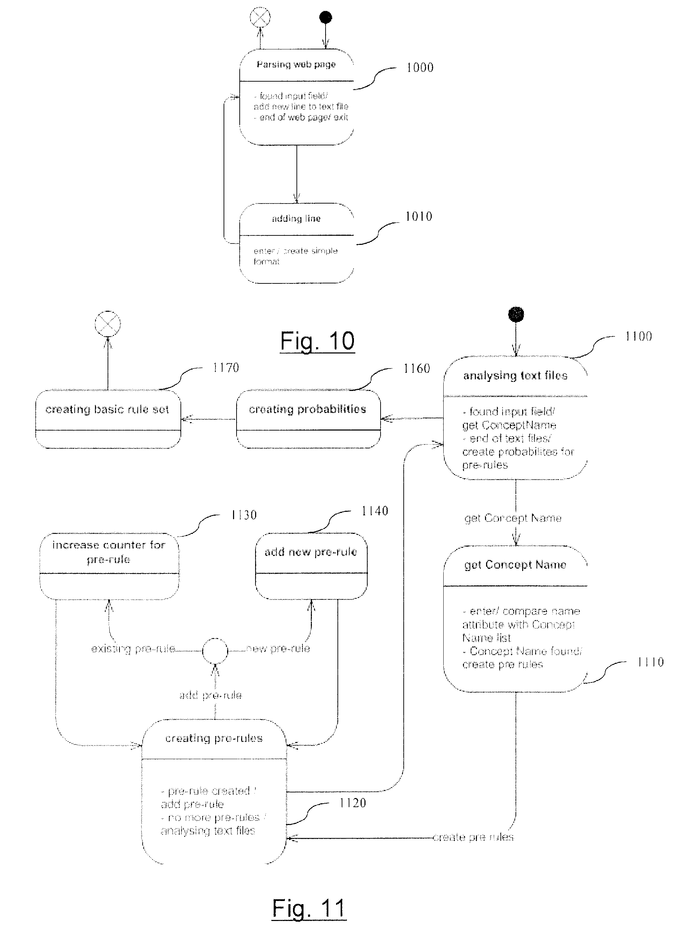

In a first step there is created a simplified version of the Web forms. This procedure is schematically illustrated by the flowchart shown in Fig. 10. For that purpose all the Web forms are first parsed (operation 1000) and then converted into text files (operation 1010). In the converted text files each input field of a form is represented by a simple format or pattern representing the relevant parts or parameters of the input fields which then are later also relevant for the rule generation. Such a format or pattern or template may take the following form, whereas all other parts of the form which do not fit into this schema and therefore are not considered relevant for an input field are ignored.

### Label, input(Name Attribute, length, type, value)

The Label here is the last text string found in the source code before the input field while parsing the Web form. It is the character string which a browser would display as label of the input field to the user to explain which data should be inserted. On the other hand, the Name Attribute, length, type and value are the actual attributes of the input field as defined in the HTML source code of the form. value here is the predefined value of the input field which is displayed by a browser as content of the field until the user overwrites it by his input. Usually the value is null, except when Web forms are already filled in with a text like "Please enter your e-mail address here".

In the following there is given an example of an input field as it shows up in the text file generated by the process for generating a simplified version of the form:
First Name, input (FName, 30, text, please enter your first name)

The second part of the analysis finally consists in creating rules using the text files generated during previously explained step and the lists containing the attributes corresponding to the concept names (hereinafter referred to as concept names list) which have been created as a result of the manual examination of sample webpages as previously explained. This procedure is schematically illustrated by the flowchart shown in Figures 11 and 12.

At first reference is made to Fig. 12. As mentioned before, a text file has been generated (operation 1230) for each of the input forms of the sample of input forms resulting in a sample of text files 1240. Moreover, by manually creating Concept Name lists (operation 1200) as explained before lists 1220 have been generated which contain for each Concept Name (the term which later forms the conclusion of a rule) a list of possible Name Atrributes by which this Concept Name is expressed in the source code of an input form. By comparing these two lists (operation 1250) in a manner which is explained in more detail in the following a basic rules set 1260 can be automatically created. For that purpose the name attributes contained in the Concept Names list 1210 are compared with the Name Attributes in the text lists 1230 representing the input fields of the input forms. If a match is found this means that this name attribute in the list 1230 expresses the corresponding Concept Name of list 1210 to which this Name Attribute belongs. This means that this correspondence can actually be used for creating a rule having as a condition the Name Attribute and as a conclusion the Concept Name. If not only the Name Attribute is used but also the label which belongs to this input field for which a match was found when comparing the two lists a further rule can be created having as a condition the label and as a conclusion Concept Name.

In the following the rule generation according to one embodiment will be explained in somewhat more detail referring to Fig. 11.

The Name Attribute of each representation of each input field in the text files is compared to the Name Attributes in the Concept Name lists (operation 1110). Hence the Concept Name matching to a representation of an input field can be found out. If a match is found this is used to create a rule.

When a Concept Name (or its corresponding Name Attribute) has been found in a representation of an input field in a text file, one or more pre-rules or "preliminary rules" are created out of the input field (operation 1110). According to a (just exemplary embodiment from 2 to 6 pre-rulesfor one inputfield can be created. The rules differ in their condition, not in their conclusion, the conclusion is the Concept Name for which a match has been found. The condition may be the Attribute Name of the input field for which the comparison was made at which a match was found, or it may be the label of this field. Alternatively a rule may be generated using the label or the Name Attribute of the preceding field or of the field succeeding the field for which a match was found. In this case the rule must in the condition in addition to the parameter value of the label or the Name Attribute being used for the rule contain an indication of the location of the parameter with respect to the input field (current field, preceding field or succeeding field). Based on these three locations and the parameters label and Name Attribute up to 6 pre-rules may be generated based on the comparison of the two lists for one input field.

A thus generated pre-rule consists of the rule itself as it was explained already in connection with previous embodiments, i. e. a condition (here the label or the Name Attribute of the input field as the condition (possibly also an indication of the location) and the Concept Name as the conclusion of the rule), however, without a fixed assigned probability yet, and instead a counter considering or counting the occurrence frequency of this pre-rule.

In the following an example of such a pre-rule (without location indication)is given:
*If the Label of the input field is name*
*then the Concept Name is FirstName counter =* 8

Pre-Rules which are created are then checked whether there is already a pre-rule having the same condition and the same conclusion, i.e. the same parameter value for the label and the same Concept Name (operation 1120). If so, the corresponding counter of this pre-rule is increased (operation 1130). If no such ore-rule has been generated yet, it is then generated (operation 1140).

In this manner a large sample of input forms can be automatically analyzed in this manner by checking whether certain patterns are contained therein (namely combinations of certain parameter values as conditions with certain concept Names as conclusions), and for each such pattern found there is then generated a corresponding rule. By analyzing a statistically representative sample of input forms the thus generated rules contain a significant knowledge about which Concept Names are found under which condition with which probability.

This means after analyzing all text files there can be pre-rules with the same condition but for different Concept Names. These pre-rules are all summed up in order to establish probabilities (operation 1100). For example a pre-rule with the same condition as the rule above but for a different Concept Name could be as follows:
*If the Label of the input field is name*
*then the Concept Name is LastName counter =* 2

If no other pre-rule matching the same condition is found, then the counters are compared to each other in order to establish the probability of each rule. In the example mentioned above pre-rules with the same condition have been found 10 times (counter of FirstName + counter of LastName). This means, that the probability for the concept name being FirstName is 80% (8 out of 10 times) and the probability for the concept name being LastName is 20% (operation 1160).The final rules are thus created with these probabilities (operation 1170) as explained already previously by assigning the so derived probabilities to the individual rules.

According to one embodiment there may be provided a threshold parameter for probabilities. If a rule's probability remains under a certain threshold, then this rule is skipped and is not included in the basic rules set. In case of a prototype which has been built the threshold was set to 8% which finally lead to basic set of 144 rules.

It should be mentioned that according to one embodiment starting with no basic rules is also possible, since rules can be automatically generated while using the form filler by updating the rules repository as has been explained with a previous embodiment. However starting with a predefined set of rules allows users to have better auto form filling results right from the start.

I should be mentioned that the invention hereinbefore has been described by exemplary embodiments to which modifications are possible for the skilled person. E.g., it would be possible to implement the form filling module as a component of a browser or a mobile phone itself instead of as a proxy. Moreover, the automatic form filling module may be implemented on a portal which may be accessed by a mobile device or even by a standalone computer via a computer network such as the internet. Or, to improve the acceptance and to minimize the hurdle for the usage of this feature, the form filling may be implemented as a default function of the mobile phone to avoid users spending time downloading it. Moreover, people might not necessarily think about downloading this function when accessing web forms.

The skilled person will understand that the embodiments and their components, processes or modules as described hereinbefore may be implemented by hardware or by software or a combination of them. In particular, modules operating to execute procedural operations as explained in connection with the previous description may be implemented by one or more computer programs running on a computer or any computing device such as a mobile phone, a smartphone, a standalone PC, a PDA, or the like.

## Claims

1. An apparatus for automatically filling web-based forms on mobile devices comprising:
a parser for parsing a web-based form to create an object for each input field contained in said form, said object being a representation of said input field which represents one or more parameters describing or defining said input field or its neighbourhood;
a rule inspecting module for evaluating rules comprising a condition to be checked and a conclusion to be drawn if said condition is found to be fulfilled, said evaluation being performed by trying to match a rule to an object, whereas a rule comprises as said condition a representation of an input field in which one or more parameters of said input field contain or assume a distinct value, and said rule further including as said conclusion a distinct semantic meaning of said input field, said rule further including a distinct score indicating the probability that the conclusion is true if said condition is found to be fulfilled when a rule is evaluated for a certain input field by trying to match it against the object representing said input field;
a user data filling module for automatically filling said forms based on said evaluation of said rules by filling an input field of said form with a value retrieved from a user database and identified by said semantic meaning.

2. The apparatus of claim 1, further comprising:
said parser being adapted to generate an object structure representing all the input fields in a form to be automatically filled, said object structure containing one object for each of said input fields.

3. The apparatus of claim 2, wherein
said object structure comprises a list containing said objects, each object containing a representation of the input field to which it corresponds and further comprising a reference to the object preceding it and to the object succeeding it.

4. The apparatus of one of claims 1 to 3, further comprising:
said rule inspecting module being adapted to evaluate for each input field of said web-based form a plurality of rules stored in a rule repository by trying to match said rules against the object representation corresponding to said input field;
for each certain semantic meaning of said input field for which one or more corresponding rules have been found to be fulfilled, combing the scores corresponding to the rules fulfilled for a certain semantic meaning to obtain a combined score and selecting the semantic meaning for the input field for which the highest combined score has been obtained.

5. The apparatus of one of claims 1 to 4, wherein
said apparatus is implemented as a proxy acting as a mediator between the web browser running on the mobile device and a web server on which a form is to be filled.

6. The apparatus of one of the preceding claims, wherein said parameters defining or describing said input field which are represented by said objects and said rules are one ore more of the following:
a label which is displayed next to said input field when said form is displayed on said mobile device;
an internal name of said input field in the source code of said web-based form.

7. The apparatus of one of the preceding claims, wherein
said apparatus is implemented as a proxy server enabling access to multiple users.

8. The apparatus of one of the preceding claims, wherein said rules in addition to said parameters contain an indication of the location of said parameters with respect to the input field.

9. The apparatus of claim 8, wherein said indication of a location of a certain parameter with respect to a certain input field may indicate one or more of the following:
the input field preceding the current input field;
the current input field;
the input field succeeding the current input field.

10. The apparatus of one of the preceding claims wherein
if a rule which has assigned score indicating a probability of hundred percent is found to be fulfilled no further rules are evaluated and the semantic meaning corresponding to said rule is chosen for filling said input field.

11. The apparatus of one of the preceding claims wherein
rules are classified as either normal rules or as superior rules, the score of the superior rules being higher weighted when deriving the total score for a certain semantic meaning.

12. The apparatus of one of the preceding claims wherein
said parser and said rule inspecting module are located on a translation server separate from said mobile device, said translation server forwarding to said mobile device identifiers as a result of said rule evaluation which enable said mobile device to fill said web-based form by the corresponding user data.

13. The apparatus of one of the preceding claims, further comprising:
a user interface enabling the user to amend the data which has been automatically filled into said form based by said apparatus based on said rule evaluation, and
an updating module for updating the rules in the rule repository based on the amendment or a confirmation of the suggested data by a user.

14. The apparatus of claim 13, wherein said updating module comprises one or more of the following:
a module for decreasing the score of a rule the conclusion of which has been amended by said user input;
a module for increasing the score of a rule the conclusion of which has not been modified by said user amendment;
a module for storing a new rule if no rule exists yet which corresponds to said user amendment.

15. The apparatus of the preceding claims, further comprising one or more of the following:
a module for locally updating a rule repository on said apparatus;
a module for updating a remote rule repository on a server;
a module for updating a local rule repository by downloading a new rules set from a server.

16. The apparatus of the preceding claims, wherein
said apparatus is integrated into a browser of a computer or a mobile device.

17. An apparatus for automatically generating a set of rules which may be used in connection with an apparatus according to one of the preceding claims, said apparatus comprising:
for each semantic meaning which an input field may assume, having stored a list of possible values which parameters describing or defining said input field or its neighbourhood may assume;
a module for parsing web-based forms for input fields and generating an object for each input field, said object being a representation of said input field which represents one or more parameters describing or defining said input field or its neighbourhood, whereas;
a module for each object trying to match said object against said lists of possible values, and if a parameter matches with a certain one of said values generating a preliminary rule comprising said value as parameter of a condition and the semantic meaning corresponding to said value as defined by said list as a conclusion:
a module for each time a match is found, checking if a corresponding pre-rule has already been generated, and if so, for incrementing a counter corresponding to said pre-rule:
a module for evaluating the pre-rules which have thus been generated and correspond to the same semantic meaning by evaluating their respective counters to determine their respective score.

## Amended claims

### Amended claims in accordance with Rule 86(2) EPC.

**1.** An apparatus for automatically filling web-based forms on mobile devices comprising:
a parser for parsing a web-based form to create an object for each input field contained in said form, said object being a representation of said input field which represents one or more parameters describing or defining said input field or its neighbourhood;
a rule inspecting module for evaluating rules comprising a condition to be checked and a conclusion to be drawn if said condition is found to be fulfilled, said evaluation being performed by trying to match a rule to an object, whereas a rule comprises as said condition a representation of an input field in which one or more parameters of said input field contain or assume a distinct value, and said rule further including as said conclusion a distinct semantic meaning of said input field, said rule further including a distinct score indicating the probability that the conclusion is true if said condition is found to be fulfilled when a rule is evaluated for a certain input field by trying to match it against the object representing said input field;
a user data filling module for automatically filling said forms based on said evaluation of said rules by filling an input field of said form with a value retrieved from a user database and identified by said semantic meaning;
said rule inspecting module being adapted to evaluate for each input field of said web-based form a plurality of rules stored in a rule repository by trying to match said rules against the object representation corresponding to said input field;
for each certain semantic meaning of said input field for which one or more corresponding rules have been found to be fulfilled, combing the scores corresponding to the rules fulfilled for a certain semantic meaning to obtain a combined score and selecting the semantic meaning for the input field for which the highest combined score has been obtained..

**2.** The apparatus of claim 1, further comprising:
said parser being adapted to generate an object structure representing all the input fields in a form to be automatically filled, said object structure containing one object for each of said input fields.

**3.** The apparatus of claim 2, wherein
said object structure comprises a list containing said objects, each object containing a representation of the input field to which it corresponds and further comprising a reference to the object preceding it and to the object succeeding it.

**4.** The apparatus of one of claims 1 to 3, wherein
said apparatus is implemented as a proxy acting as a mediator between the web browser running on the mobile device and a web server on which a form is to be filled.

**5.** The apparatus of one of the preceding claims, wherein said parameters defining or describing said input field which are represented by said objects and said rules are one ore more of the following:
a label which is displayed next to said input field when said form is displayed on said mobile device;
an internal name of said input field in the source code of said web-based form.

**6.** The apparatus of one of the preceding claims, wherein
said apparatus is implemented as a proxy server enabling access to multiple users.

**7.** The apparatus of one of the preceding claims, wherein said rules in addition to said parameters contain an indication of the location of said parameters with respect to the input field.

**8.** The apparatus of claim 7, wherein said indication of a location of a certain parameter with respect to a certain input field may indicate one or more of the following:
the input field preceding the current input field;
the current input field;
the input field succeeding the current input field.

**9.** The apparatus of one of the preceding claims wherein
if a rule which has assigned score indicating a probability of hundred percent is found to be fulfilled no further rules are evaluated and the semantic meaning corresponding to said rule is chosen for filling said input field.

**10.** The apparatus of one of the preceding claims wherein
rules are classified as either normal rules or as superior rules, the score of the superior rules being higher weighted when deriving the total score for a certain semantic meaning.

**11.** The apparatus of one of the preceding claims wherein
said parser and said rule inspecting module are located on a translation server separate from said mobile device, said translation server forwarding to said mobile device identifiers as a result of said rule evaluation which enable said mobile device to fill said web-based form by the corresponding user data.

**12.** The apparatus of one of the preceding claims, further comprising:
a user interface enabling the user to amend the data which has been automatically filled into said form based by said apparatus based on said rule evaluation, and
an updating module for updating the rules in the rule repository based on the amendment or a confirmation of the suggested data by a user.

**13.** The apparatus of claim 12, wherein said updating module comprises one or more of the following:
a module for decreasing the score of a rule the conclusion of which has been amended by said user input;
a module for increasing the score of a rule the conclusion of which has not been modified by said user amendment;
a module for storing a new rule if no rule exists yet which corresponds to said user amendment.

**14.** The apparatus of the preceding claims, further comprising one or more of the following:
a module for locally updating a rule repository on said apparatus;
a module for updating a remote rule repository on a server;
a module for updating a local rule repository by downloading a new rules set from a server.

**15.** The apparatus of the preceding claims, wherein
said apparatus is integrated into a browser of a computer or a mobile device.

**16.** An apparatus for automatically generating a set of rules which may be used in connection with an apparatus according to one of the preceding claims, said apparatus comprising:
for each semantic meaning which an input field may assume, having stored a list of possible values which parameters describing or defining said input field or its neighbourhood may assume;
a module for parsing web-based forms for input fields and generating an object for each input field, said object being a representation of said input field which represents one or more parameters describing or defining said input field or its neighbourhood, whereas;
a module for each object trying to match said object against said lists of possible values, and if a parameter matches with a certain one of said values generating a preliminary rule comprising said value as parameter of a condition and the semantic meaning corresponding to said value as defined by said list as a conclusion:
a module for each time a match is found, checking if a corresponding pre-rule has already been generated, and if so, for incrementing a counter corresponding to said pre-rule:
a module for evaluating the pre-rules which have thus been generated and correspond to the same semantic meaning by evaluating their respective counters to determine their respective score.
